# EUROPEAN PATENT APPLICATION

(11) **EP 4 810 449 A1**
(43) Date of publication of application: **23.09.2026**
(21) Application number: 24891242.0
(22) Date of filing: 31.10.2024
(51) Int. Cl.: C02F 1/461, C25B 11/052, C25B 11/081, C25B 15/00

(54) **WATER TREATMENT DEVICE**

(30) Priority: 16.11.2023 JP 2023195328
(71) Applicant: Panasonic Housing Solutions Co., Ltd., Kadoma-shi, Osaka 571-8686 (JP)
(72) Inventor: UEYA, Noriyoshi, Kadoma-shi, Osaka 571-0057 (JP); KODA, Ryo, Kadoma-shi, Osaka 571-0057 (JP)
(74) Representative: Müller-Boré & Partner Patentanwälte PartG mbB
(86) International application number: PCT/JP2024/038945
(87) International publication number: WO 2025/105201

(57) **Abstract**

A water treatment device is provided, comprising: an electrolytic bath capable of storing water to be treated; a first electrode and a second electrode immersed in the water to be treated in the electrolytic bath; and a control unit that controls energization of the first electrode and the second electrode. The first electrode and the second electrode each include a catalyst layer on an electrode surface. The control unit is configured to be switchable between an electrolysis mode in which the water to be treated is electrolyzed and a film formation mode in which an oxide film is formed on the catalyst layer of an anode out of the first electrode and the second electrode, and to be capable of performing polarity inversion between the first electrode and the second electrode upon switching from the electrolysis mode to the film formation mode.

## Description

### TECHNICAL FIELD

The present disclosure relates to a water treatment device.

### BACKGROUND ART

Conventionally, as a water treatment device for obtaining a product applicable to various applications by electrolyzing water using an electrode including a catalyst layer, devices such as an alkali ion water purifier, a hypochlorous acid generator, and an electrolytic water softener are known.

### PRIOR ART DOCUMENT

### PATENT DOCUMENT

Patent Document 1: JP-A-2000-42551
Patent Document 2: JP-A-2007-260492
Patent Document 3: WO 2003/000957 A
Patent Document 4: JP-A-2005-74307
Patent Document 5: JP-A-2012-81449

### SUMMARY OF THE INVENTION

### PROBLEMS TO BE SOLVED BY THE INVENTION

In a conventional water treatment device, in order to prevent inhibition of electrolysis due to adhesion of an insulating solid material called a scale to a surface of the electrode, an operation of switching an energization polarity to the electrode is performed (Patent Documents 1 to 5). The inventors of the present application have newly found that in such a water treatment device, the catalyst layer disposed on the surface of the electrode is consumed and electrolysis efficiency of water can be reduced associated with polarity switching of the electrode and the subsequent energization for electrolysis.

The present disclosure has been made in view of the above problems. That is, a main object of the present disclosure is to provide a water treatment device capable of suitably suppressing consumption of the catalyst layer.

### SOLUTIONS TO THE PROBLEMS

The inventors of the present application have tried to solve the above problems by addressing in a new direction instead of addressing in an extension of the prior art. As a result, the present inventors have reached the invention of the water treatment device that has achieved the above main object.

A water treatment device according to the present disclosure includes:
an electrolytic bath capable of storing water to be treated;
a first electrode and a second electrode immersed in the water to be treated in the electrolytic bath; and
a control unit that controls energization of the first electrode and the second electrode, in which
the first electrode and the second electrode each include a catalyst layer on an electrode surface, and
the control unit is configured to be switchable between an electrolysis mode in which the water to be treated is electrolyzed and a film formation mode in which an oxide film is formed on the catalyst layer of an anode out of the first electrode and the second electrode, and to be capable of performing polarity inversion between the first electrode and the second electrode upon switching from the electrolysis mode to the film formation mode.

### EFFECTS OF THE INVENTION

The water treatment device according to an embodiment of the present disclosure can suitably suppress the consumption of the catalyst layer.

### BRIEF DESCRIPTION OF THE DRAWINGS

[Fig. 1] Fig. 1 is a schematic view showing a water treatment device according to a first embodiment of the present disclosure.
[Fig. 2A] Fig. 2A is a schematic sectional view of an electrode used in the water treatment device according to the first embodiment of the present disclosure.
[Fig. 2B] Fig. 2B is a schematic sectional view of an electrode including an oxide film according to the first embodiment of the present disclosure.
[Fig. 3A] Fig. 3A is an energization profile of the water treatment device according to an embodiment of the present disclosure.
[Fig. 3B] Fig. 3B is an energization profile of the water treatment device according to an embodiment of the present disclosure.
[Fig. 3C] Fig. 3C is a typical energization profile in a conventional water treatment device.
[Fig. 4] Fig. 4 is a schematic view showing the water treatment device according to a second embodiment of the present disclosure.
[Fig. 5] Fig. 5 is a bar graph showing results of a film thickness retention rate of a catalyst layer obtained by the water treatment device according to an embodiment of the present disclosure and the conventional water treatment device.
[Fig. 6] Fig. 6 is a bar graph showing a lifetime of the catalyst layer obtained by the water treatment device according to an embodiment of the present disclosure and the conventional water treatment device.

### DETAILED DESCRIPTION

Hereinafter, embodiments of the present disclosure will be specifically described. It should be noted that the applicant provides the following description and examples for those skilled in the art to fully understand the present disclosure, and these are not intended to limit the claimed subject matter. That is, the present disclosure is not particularly limited to preferred aspects and the like described below, and can be appropriately modified within the scope of the object. Note that, in consideration of description of main points or ease of understanding, embodiments, examples, and the like may be separately described for convenience, but partial replacement and/or combination of configurations described in different embodiments and the like can be performed. In the description of such an embodiment, redundant description of substantially the same matters may be omitted, and only different points may be described. In particular, similar functions and effects by similar configurations may not be mentioned for each embodiment.

In the description of the present specification, reference to a direction, an orientation, or the like is merely for convenience of description, and is not intended to limit the scope of the present disclosure unless otherwise explicitly described. For example, relative terms such as "outer (or outside or external)", and "inner (or inside or internal)", and derivative terms thereof should be understood to refer to directions as described or illustrated. Similarly, "on" an element includes not only a case of being in contact with an upper surface of the element but also a case of not being in contact with the upper surface of the element. That is, "on" the element includes not only an upper position away from the element, that is, an upper position via another object on the element and an upper position spaced apart from the element, but also a position immediately above the element in contact with the element. In addition, "on" does not necessarily mean an upper side in the vertical direction. "On" merely indicates a relative positional relationship of certain elements. That is, unless otherwise explicitly described, the invention is not required to be limited only to a specific direction, orientation, form, or the like.

The same is applied to terms such as "provided", "disposed", "connected", and "attached", and derived terms thereof, and they are not limited to direct aspects, and may be aspects in which other elements such as inclusions are interposed therebetween, unless otherwise explicitly described.

Various numerical ranges referred to herein are intended to include lower and upper numerical values themselves, unless otherwise specified. Note that the term "about" means that it may include variations or differences of a few percent, for example, ±10%.

### (First Embodiment)

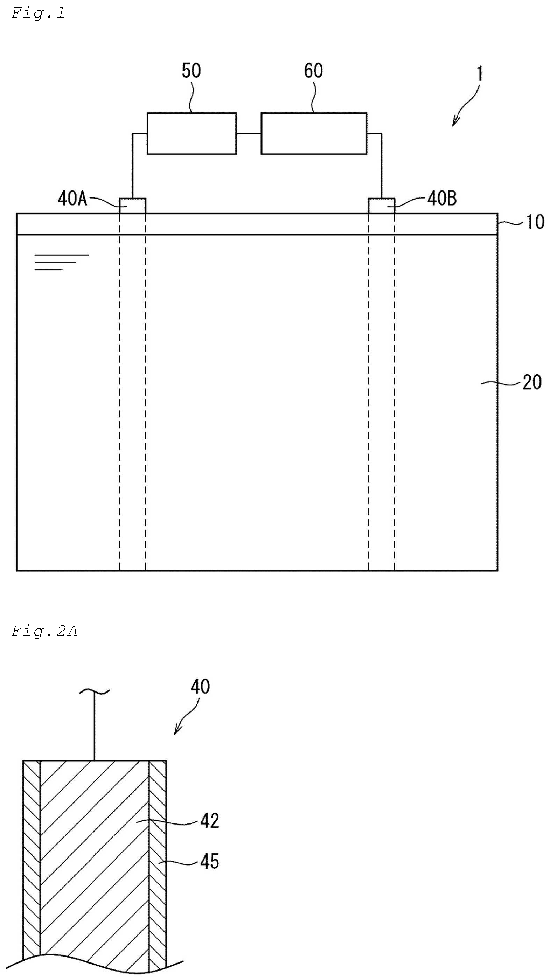

A water treatment device 1 according to a first embodiment will be described with reference to Fig. 1. Fig. 1 is a schematic diagram illustrating the water treatment device 1 according to the first embodiment.

The water treatment device 1 mainly includes an electrolytic bath 10 capable of storing water to be treated 20, a plurality of electrodes 40A and 40B immersed in the water to be treated 20 stored in the electrolytic bath 10, and a control unit 60 that controls energization of the plurality of electrodes 40A and 40B.

As the water to be treated 20, hard water such as city water (for example, water containing a hardness component) supplied from an outside may be used. Hard water is defined as water having a hardness of, for example, 120 mg/L or more. The water treatment device 1 of the present disclosure can be used, for example, as an electrolyzed water generation device for generating acidic electrolyzed water and alkaline electrolyzed water by electrolyzing the hard water.

### (electrolytic bath 10)

The electrolytic bath 10 may be configured as a container for storing the water to be treated 20 therein and performing electrolysis of the water to be treated 20 by the plurality of electrodes 40A and 40B.

Although not shown, the electrolytic bath 10 may include an inlet for allowing the water to be treated 20 (or also referred to as "raw water") before treatment to flow into the electrolytic bath 10, and an outlet for taking out treated water after treatment (or also referred to as "treated water" or "electrolyzed water") from the electrolytic bath 10. The water to be treated 20 may be supplied to the electrolytic bath 10 via the inlet, electrolyzed in the electrolytic bath 10, and then taken out from the outlet as the treated water. The treated water may be taken out separately as, for example, acidic water obtained on an anode side and alkaline water obtained on a cathode side.

For example, the water to be treated 20 may be continuously electrolyzed by being continuously supplied into the electrolytic bath 10 from the inlet and flowing from the electrolytic bath 10 toward the outlet. The treated water can be continuously taken out from the outlet. In such a configuration, a flow rate of the water to be treated 20 supplied from the inlet to the electrolytic bath 10 may be the same as a flow rate of the treated water taken out from the electrolytic bath 10 through the outlet.

### (Electrodes 40A and 40B)

The plurality of electrodes including the first electrode 40A and the second electrode 40B are immersed in the water to be treated 20 stored in the electrolytic bath 10. The first electrode 40A and the second electrode 40B may be fixed inside the electrolytic bath 10 such that at least a part of the electrodes can be immersed in the water to be treated 20 stored in the electrolytic bath 10.

The first electrode 40A and the second electrode 40B may be arranged to face each other inside the electrolytic bath 10. During energization, one of the first electrode 40A and the second electrode 40B functions as the anode, and the other functions as the cathode.

The first electrode 40A and the second electrode 40B include a substrate 42 such as carbon, nickel, or titanium, and a catalyst layer 45 positioned on a surface of the substrate (see Fig. 2A). The catalyst layer 45 may be provided to cover the surface of the substrate 42. The catalyst layer 45 of one electrode 40 may be provided to cover at least a surface of the substrate 42 facing the other electrode, or may be provided to cover an entire surface of the substrate 42.

As a material of the catalyst layer 45, for example, a material in a form such as metal, alloy, and/or metal oxide can be used. Although it is merely an example, as a specific material of the catalyst layer 45, at least one selected from the group consisting of noble metals (such as platinum, iridium, palladium, gold, silver, ruthenium, and rhodium), copper, iron, nickel, lead, tantalum, and carbon may be used. When emphasis is placed on electrolysis efficiency during electrolysis, the catalyst layer 45 preferably contains at least a noble metal, and more preferably contains at least platinum. That is, the first electrode 40A and the second electrode 40B may be platinum-based electrodes including the catalyst layer 45 containing at least platinum.

The first electrode 40A and the second electrode 40B may be made of the same material, or substrates and/or catalyst layers of different materials may be used. Preferably, the first electrode 40A and the second electrode 40B may be made of the same material.

### (Control unit 60)

The control unit 60 controls an energization state of the first electrode 40A and the second electrode 40B immersed in the water to be treated 20. The water treatment device 1 may further include a power supply 50 electrically connected for energizing each of the first electrode 40A and the second electrode 40B, and the control unit 60 may control the energization state of the first electrode 40A and the second electrode 40B via the power supply 50.

The water treatment device of the present disclosure is particularly characterized by control of the energization state by the control unit 60. Hereinafter, the control of the energization state in the water treatment device of the present disclosure will be described in detail.

The water treatment device 1 according to the first embodiment of the present disclosure is characterized in that an energization mode for forming an oxide film can be performed during a treatment cycle, separately from an energization mode for the electrolysis of the water to be treated 20.

The control unit 60 is configured to be switchable between an electrolysis mode in which the water to be treated 20 is electrolyzed and a film formation mode in which the oxide film is formed on the catalyst layer of the electrode. That is, the control unit 60 is configured to be able to perform two different energization modes, that is, the electrolysis mode for performing energization for generating the electrolyzed water and the film formation mode for performing energization for forming the oxide film on the catalyst layer. For example, the electrolysis mode can also be referred to as "electrolyzed water generation mode", "water treatment mode", or the like. The film formation mode can also be referred to as "oxide film formation mode", "catalyst layer oxidation mode", "anodic oxidation mode", or the like. Alternatively, as two types of energization modes different from each other, the film formation mode may be simply referred to as "first energization mode", and the electrolysis mode may be simply referred to as "second energization mode".

The control unit 60 can reverse polarity between the first electrode 40A and the second electrode 40B upon switching between the electrolysis mode and the film formation mode. More specifically, the control unit 60 can switch the film formation mode, the electrolysis mode, and polarity inversion in this order.

In the electrolysis mode, the control unit 60 applies a potential necessary for the electrolysis of the water to be treated to the first and second electrodes 40A and 40B, with one of the first and second electrodes 40A and 40B serving as the cathode and the other as the anode. Thus, hydroxide ions are generated at the cathode, and the alkaline electrolyzed water is generated near the cathode. On the other hand, hydrogen ions are generated at the anode, and the acidic electrolyzed water is generated near the anode.

At the time of the electrolysis of the water to be treated 20, the hydroxide ions are generated at an electrode functioning as the cathode out of the first electrode 40A and the second electrode 40B. When such hydroxide ions react with metal ions or the like contained in the water to be treated 20, an insulating solid compound called a scale is generated and adheres to an electrode surface, so that a passivation film can be formed. Such a passivation film increases a resistance value of the electrode, and thus can cause a decrease in the electrolysis efficiency during the electrolysis.

The scale attached to the electrode can be removed by reversing polarities of the electrodes. Specifically, the polarity of the electrode is reversed and energized, and vicinity of the electrode to which the scale is attached is locally brought into an acidic atmosphere, so that the attached scale can be dissolved and peeled off from the electrode. The water treatment device 1 of the present disclosure enables removal of the scale on the electrode surface by reversing polarities of the first electrode 40A and second electrode 40B after performing the electrolysis for a predetermined time. For example, after performing the electrolysis for the predetermined time with the first electrode 40A as the cathode and the second electrode 40B as the anode, the control unit 60 may switch the first electrode 40A to the anode and the second electrode 40B to the cathode.

After the polarity is switched, the energization may be performed again. By the energization while the polarity is reversed every predetermined time, it is possible to continuously perform the electrolysis of the water to be treated 20 while removing the scale.

In such energization control, the inventors of the present application have newly found that the catalyst layer 45 of the electrode functioning as the anode after the polarity inversion can be consumed during the above-described polarity inversion and the electrolysis after the polarity inversion. Specifically, components (for example, metal components such as platinum) contained in the catalyst layer 45 are eluted during the electrolysis of the water to be treated 20 and with the polarity inversion, whereby an amount of the catalyst layer 45 covering the surface of the substrate of the electrode is reduced, and as a result, the electrolysis efficiency by the water treatment device 1 can be reduced. As described above, "consumption of the catalyst layer" in the present specification broadly includes that reactivity of the catalyst layer 45 decreases with deterioration of the catalyst layer 45, and means that at least the amount of the catalyst layer 45 contributing to the electrolysis is physically reduced. When the electrolysis is performed immediately after the polarity inversion is performed, a lifetime of the electrode may be shortened due to the consumption of the catalyst layer 45.

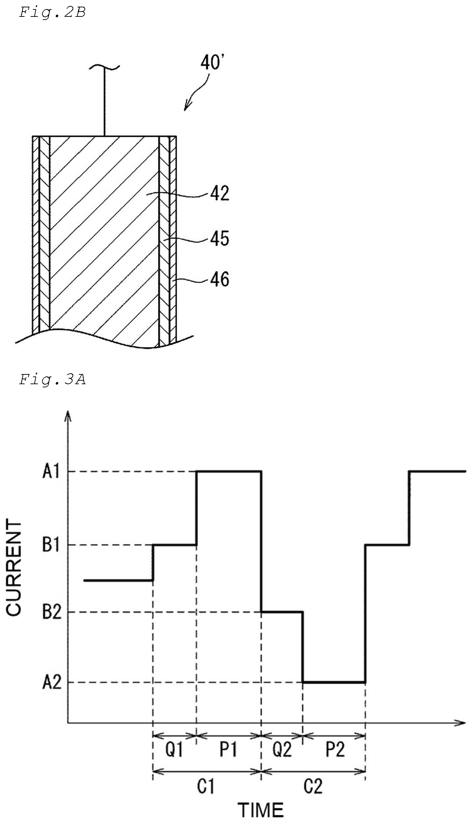

On the other hand, in the water treatment device 1 of the present disclosure, after the polarity inversion, the film formation mode is performed before electrolytic treatment is performed. Fig. 2A is a partial sectional view schematically showing the anode before performing the film formation mode. Fig. 2B is a partial sectional view schematically showing the anode after performing the film formation mode. In the film formation mode, an oxide film 46 of the metal component contained in the catalyst layer 45 is formed in the catalyst layer 45 of the electrode 40 functioning as the anode in the subsequent electrolytic treatment. For example, when the platinum-based electrode is used as the electrode 40, the platinum oxide film 46 may be formed on the catalyst layer 45 in the film formation mode.

The oxide film 46 formed on the catalyst layer 45 can suitably suppress elution of the catalyst layer 45 in the subsequent electrolysis mode. Furthermore, the oxide film 46 can also suppress the consumption of the catalyst layer 45 upon polarity inversion performed after the electrolysis mode. That is, the oxide film 46 can function as a protective film that suitably suppresses the elution and consumption of the catalyst layer 45 upon electrolytic treatment and polarity inversion. Alternatively, the oxide film 46 can also be regarded as a protective film that suppresses elution deterioration of the catalyst layer 45 when a high potential is applied. According to the present disclosure, by including the film formation mode for forming such an oxide film 46, the water treatment device capable of suitably suppressing the consumption of the catalyst layer 45 is provided.

In the electrolysis mode for electrolyzing the water to be treated 20 and the film formation mode for forming the oxide film, the energization is performed at electrode potentials different from each other. A potential difference between the first electrode 40A and the second electrode 40B required for the electrolysis of the water to be treated is relatively large, and the electrode potential of the anode in the film formation mode can be lower than the electrode potential of the anode in the subsequent electrolysis mode. Therefore, according to the water treatment device 1 of the present disclosure, by performing the film formation mode after the polarity inversion, the energization is performed at a lower electrode potential before the electrolysis mode is carried out, whereby the oxide film 46 can be formed on the catalyst layer 45 of the anode. This means that it is possible to avoid a rapid change in the electrode potential by performing stepwise energization to shift to the electrolysis mode through the film formation mode in the electrode that functions as the anode after the polarity inversion. This enables suppression of the consumption of the catalyst layer associated with the polarity inversion.

In the water treatment device of the present disclosure, the treatment cycle including the film formation mode, the electrolysis mode, and the polarity inversion can be repeatedly performed. More specifically, after the electrolysis in the electrolysis mode, in the first electrode switched from the cathode to the anode by the polarity inversion, the film formation mode is performed, and the oxide film is formed on the surface of the catalyst layer. Thereafter, the electrolysis mode is performed using the first electrode including the oxide film as the anode, to electrolyze the water to be treated. After the electrolysis for a predetermined time, by reversing the polarity again, the first electrode including the oxide film is switched from the anode to the cathode. On the other hand, the second electrode functioning as the cathode is switched to the anode. Subsequently, the mode shifts to the film formation mode, and the oxide film is formed on the catalyst layer of the second electrode. Thereafter, by switching to the electrolysis mode, the electrolysis using the second electrode including the oxide film as the anode is performed.

As described above, the control unit may continuously electrolyze the water to be treated by repeating the treatment cycle including the film formation mode, the electrolysis mode, and the polarity inversion. The oxide film formed on the catalyst layer can be reduced and removed by reversing the polarity again after the subsequent electrolysis mode is performed and by being energized as the cathode. In the present disclosure, in continuous electrolysis with the polarity inversion, by including the film formation mode during the treatment cycle, the oxide film is formed on the anode before the electrolysis mode is performed. Thus, even if the oxide film formed once is reduced and removed when energized as the cathode, the oxide film is formed again before the electrolysis when energized as the anode in the next cycle. That is, in the electrolysis mode, the electrolysis can be always performed using the electrode including the oxide film as the anode. Therefore, the lifetime of the electrode used for the electrolysis is extended, and a water treatment device capable of performing a continuous treatment operation for a longer time is realized.

As described above, according to the water treatment device of the present disclosure, in addition to the electrolysis mode for electrolyzing the water to be treated, the film formation mode for forming the oxide film can be performed, so that the consumption of the catalyst layer can be suppressed, and as a result, the lifetime of the electrode can be extended. Usually, performing the energization mode different from the electrolysis treatment during the electrolytic treatment can be avoided since this would increase the overall treatment cycle time and may reduce the electrolysis efficiency in one cycle. However, in the water treatment device of the present disclosure, the consumption of the catalyst layer can be suppressed and reduction in the electrolysis efficiency in a long-term treatment can be suppressed by intentionally performing the film formation mode. That is, according to the water treatment device of the present disclosure, suitable electrolysis efficiency can be maintained over more treatment cycles. Therefore, the water treatment device of the present disclosure can be particularly useful in continuous treatment of the water to be treated.

The oxide film 46 is preferably formed on an outer surface of the catalyst layer 45 so as to cover the catalyst layer 45 (see Fig. 2B). That is, the oxide film 46 may be positioned at an outermost layer of the electrode 40. For example, the oxide film 46 may be formed to cover at least 50% of an outer surface area of the catalyst layer 45. Preferably, the catalyst layer 45 may be entirely covered with the oxide film 46 formed on the outermost layer of the electrode 40. This means that the oxide film 46 is formed over an entire outer surface of the catalyst layer 45. As described above, the catalyst layer 45 is widely covered with the oxide film 46, so that the consumption and elution of the catalyst layer 45 during the polarity inversion and in the subsequent electrolysis mode can be suitably suppressed.

In the water treatment device according to one aspect of the present disclosure, the control unit is configured to be able to perform the film formation mode not only during the treatment cycle but also before start of the electrolytic treatment.

In such an aspect, the film formation mode may be performed before the start of the electrolytic treatment. For example, in a first cycle of the treatment cycle, the film formation mode may be performed before performing the electrolysis mode. That is, after activation of the water treatment device, the energization for forming the oxide film on the catalyst layer of the electrode functioning as the anode may be performed before performing the electrolysis in the treatment of the first cycle. This makes it possible to suitably suppress the consumption of the catalyst layer of the electrode functioning as the anode during energization in the electrolysis mode of the first cycle.

The control unit may perform the film formation mode by controlling the electrode potential of the electrode used as the anode in the subsequent electrolysis mode to be a predetermined value. That is, the control unit applies a predetermined electrode potential to the anode in the film formation mode to form the oxide film on the catalyst layer of the anode. Usually, in the electrolysis mode, the control unit applies a voltage equal to or higher than a voltage required for the electrolysis of the water to be treated between the first electrode and the second electrode to perform the electrolysis of the water to be treated. On the other hand, in the film formation mode, the control unit may form the oxide film on the catalyst layer by controlling the electrode potential of the anode to be near oxidation potential of the component contained in the catalyst layer. For example, when the catalyst layer is a platinum-based electrode mainly containing platinum, the platinum oxide film may be formed on the catalyst layer by controlling the electrode potential of the anode to be near the oxidation potential of platinum.

The electrode potential of the anode in the film formation mode may be determined based on the oxidation potential of the metal as a main component constituting the catalyst layer. That is, the control unit is configured to apply the electrode potential near the oxidation potential of the metal component contained in the largest amount in the catalyst layer to the anode. This can make it possible to form the oxide film on the catalyst layer of the anode.

In the present specification, the "oxidation potential" of a certain component is a potential at which the component is oxidized. The oxidation potential may be determined by electrochemical measurement such as cyclic voltammetry, or a literature value may be used.

The term "near oxidation potential" in the present specification means an electrode potential value that is equal to or higher than the oxidation potential of the metal component contained in the catalyst layer and close to the oxidation potential. Specifically, when the oxidation potential based on a standard hydrogen electrode (SCE) at a predetermined temperature is Eₒₓ (mV vs. SCE), the electrode potential corresponding to the "near oxidation potential" corresponds to an electrode potential of Eₒₓ (mV vs. SCE) or more and Eₒₓ+1000 (mV vs. SCE) or less under the same temperature condition. That is, an electrode potential Eₐ applied to the anode may be in a range of Eₒₓ ≤ Eₐ ≤ (Eₒₓ+1000 mV) based on an oxidation potential Eₒₓ of the metal component mainly contained in the catalyst layer. When emphasis is placed on a formation efficiency of the oxide film, the electrode potential Eₐ applied to the anode is preferably within a range of Eₒₓ ≤ Eₐ ≤ (Eₒₓ+800 mV), and more preferably within a range of Eₒₓ ≤ Eₐ ≤ (Eₒₓ+600) mV. It should be noted that the above-mentioned numerical range can vary depending on water quality of the water to be treated and the like.

For example, the catalyst layer can be the platinum-based electrode containing platinum. Platinum oxides have multiple oxidation states of PtOH, PtO and PtO₂. Specifically, PtOH is generated at a low potential, PtO is generated by oxidizing PtOH on a higher potential side, and PtO₂ is generated by further oxidizing PtO. Thus, platinum has a plurality of oxidation potentials corresponding to the respective oxidation states. In the water treatment device of the present disclosure using the platinum-based electrode, the type of platinum oxide produced in the catalyst layer is not particularly limited. That is, the oxide film may contain one type of metal oxide, or may contain multiple types of metal oxides. For example, the oxide film may contain at least one type of platinum oxide selected from the group consisting of PtOH, PtO, and PtO₂. Therefore, in the water treatment device using the platinum-based electrode, the electrode potential of the anode in the film formation mode may be an electrode potential capable of generating at least one type of platinum oxide selected from the group consisting of PtOH, PtO, and PtO₂. For example, the electrode potential of the anode in the film formation mode may be in a range of 800 mV or more and 1500 mV or less, or 800 mV or more and 1400 mV or less with respect to the standard hydrogen electrode at 25°C. When the electrode potential of the anode is in the above range, platinum contained in the catalyst layer is oxidized, and the platinum oxide film can be suitably formed.

As described above, in the film formation mode, the anode is controlled to be energized at a desired electrode potential. For example, the electrode potential of the anode in the film formation mode may be achieved by current value control. That is, the control unit may adjust the electrode potential of the anode to a desired value by controlling a current value applied to the first electrode and the second electrode. For example, the control unit may store in advance a current value at which the electrode potential is the desired value in a memory or the like, and achieve the desired electrode potential by performing energization with the current value stored in the film formation mode.

Alternatively, the electrode potential of the anode in the film formation mode may be achieved by voltage value control. That is, the control unit may adjust the electrode potential of the anode to the desired value by controlling a voltage value applied to the first electrode and the second electrode. For example, the control unit may store in advance a voltage value at which the electrode potential is the desired value in the memory or the like, and achieve the desired electrode potential by applying the voltage stored in the film formation mode.

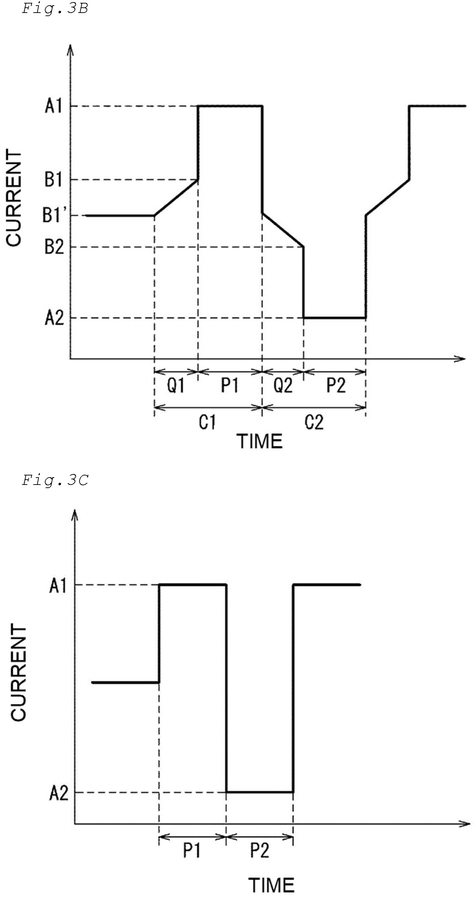

Figs. 3A and 3B are energization profiles of the first electrode or the second electrode in the water treatment device of the present disclosure. In the water treatment device of the present disclosure, a cycle time C1 of the treatment cycle includes an execution time P1 of the electrolysis mode and an execution time Q1 of the film formation mode. For example, the control unit may switch between the electrolysis mode and the film formation mode by changing the current value stepwise between a current value A1 in the electrolysis mode and a current value B1 in the film formation mode (see FIG. 3A). That is, the oxide film may be formed by being held at the current value B1 for a predetermined time (Q1), and energization may be performed at the current value A1 in the electrolysis mode after an end of the film formation mode.

Alternatively, the control unit may gradually vary the current value. For example, as illustrated in Fig. 3B, in the film formation mode, the control unit may perform control so that the current value gradually increases from a certain current value B1' to B1. In such a control mode, an amount of change in current value per unit time (that is, a sweep speed of the current value) may be constant or not necessarily constant over the execution time Q1 of the film formation mode. For example, a current profile in the film formation mode may include a sweep portion in which the current value gradually varies and a holding portion held at a predetermined current value.

Note that although the profiles of Figs. 3A and 3B show an aspect in which the desired electrode potential in the film formation mode is achieved by controlling the current value, the same profile may be applied also in an aspect in which the voltage value is controlled. That is, during transition from the electrolysis mode to the film formation mode through the polarity inversion, the control unit may control the potential applied to the electrode to vary stepwise. Alternatively, the control unit may control the voltage value with a profile including a sweep-like potential variation such that the potential applied to the electrode gradually varies.

Before switching to the electrolysis mode, the control unit controls energization to perform the film formation mode for a predetermined time to form the oxide film on the catalyst layer of the anode. In general, the longer an energization time at an electrode potential for forming the oxide film, the more a formation reaction of the oxide film proceeds. This makes it possible to obtain effects such as an improvement in coverage of the catalyst layer by the oxide film and/or an increase in thickness of the oxide film. Therefore, as a treatment time in the film formation mode is longer, more oxide films are formed, and the catalyst layer can be suitably protected. When emphasis is placed on suppression of the elution and consumption of the catalyst layer, the treatment time in the film formation mode may be 1% or more, 3% or more, or 5% or more with respect to the energization time in the electrolysis mode.

On the other hand, from the viewpoint of more efficiently performing the electrolysis of the water to be treated, the execution time of the film formation mode is preferably shorter. When emphasis is placed on execution of efficient water treatment, the treatment time in the film formation mode may be 65% or less, 60% or less, or 50% or less with respect to the energization time in the electrolysis mode.

The cycle time of the treatment cycle including the electrolysis mode, the film formation mode, and the polarity inversion between the electrolysis mode and the film formation mode is not particularly limited, but can be, for example, 0.5 minutes or more and 60 minutes or less, 1 minute or more and 30 minutes or less, or 1.5 minutes or more and 15 minutes or less.

For example, an amount of the oxide film formed in the film formation mode can be converted into an amount of electricity required to reduce the oxide film, and can be evaluated as an oxide film capacitance. Specifically, the oxide film capacitance can be determined by measuring the current value when a potential of -0.1 V is applied to the electrode on which the oxide film is formed for 180 seconds, and integrating the obtained current-time curve with time. The oxide film capacitance per unit area is determined by dividing this oxide film capacitance by an electrode area.

For example, the oxide film capacitance per unit area at the end of the film formation mode can be, for example, 0.05 µC·m⁻² or more, or 0.15 µC·m⁻² or more, or preferably 0.3 µC·m⁻² or more. When the oxide film capacitance per unit area is in the above-mentioned range, it is possible to suitably suppress the consumption of the catalyst layer accompanying execution of the electrolysis mode and polarity inversion following the film formation mode. On the other hand, although an upper limit value of the oxide film capacitance per unit area is not particularly limited, the upper limit value can be, for example, 5.0 µC·m⁻² or less, and preferably 1.5 µC·m⁻² or less when emphasis is placed on energization efficiency in the film formation mode.

The electrode including the oxide film formed in the film formation mode becomes the cathode by the polarity inversion after undergoing the electrolysis in the subsequent electrolysis mode. Thereafter, at least a part of the oxide film formed on the catalyst layer can be reduced by being energized as the cathode in the film formation mode and the electrolysis mode. Subsequently, the electrode is switched to the anode again by the polarity inversion, and subjected to the film formation mode, whereby the oxide film is newly formed. As described above, in the water treatment device of the present disclosure, formation and reduction and removal of the oxide film are repeated in the catalyst layer by repeating the treatment cycle. Since the film formation mode is included in the treatment cycle, even if the oxide film formed once by the polarity inversion is reduced and removed, the film formation mode is performed after the polarity is reversed again, so that the oxide film can be formed again. Thus, the catalyst layer of the electrode whose polarity is reversed every treatment cycle can be suitably protected by the oxide film formed every treatment cycle. Therefore, according to the present disclosure, there is provided the water treatment device capable of performing the electrolytic treatment accompanying the polarity inversion while suitably suppressing the consumption of the catalyst layer.

### (Second Embodiment)

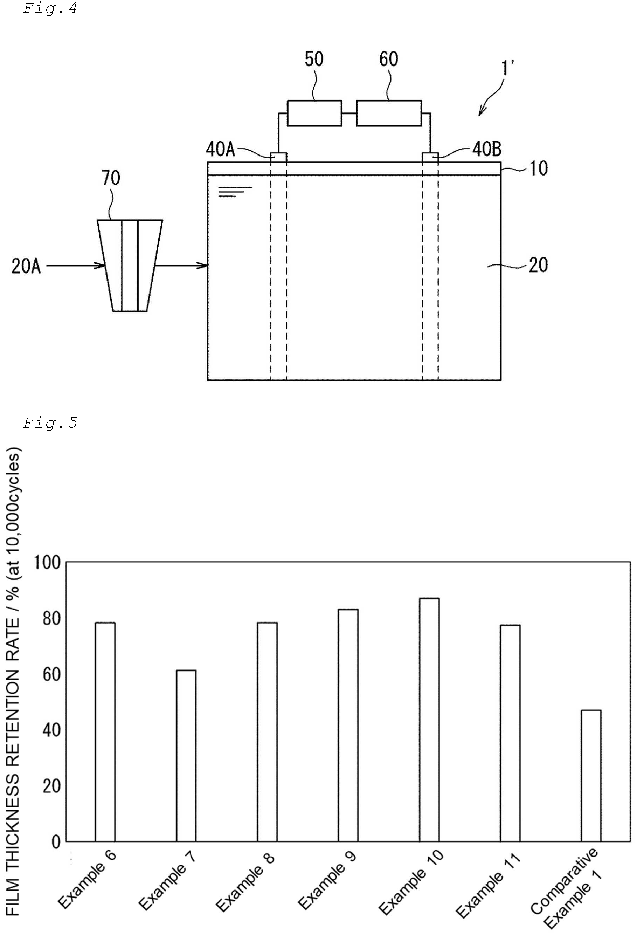

Subsequently, a water treatment device 1' according to a second embodiment will be described (see Fig. 4). The water treatment device 1' is different from the water treatment device 1 according to the first embodiment in that the water treatment device 1' further includes a pretreatment unit 70 in a previous stage of the electrolytic bath 10.

Fig. 4 is a schematic view showing a configuration of the water treatment device 1' according to the second embodiment of the present disclosure. As shown, the water treatment device 1' includes the pretreatment unit 70 on an upstream side of the electrolytic bath 10. In such a configuration, water to be treated 20A is supplied to the electrolytic bath 10 via the pretreatment unit 70. That is, the pretreatment unit 70 receives the water to be treated 20A before being supplied to the electrolytic bath 10. The water to be treated discharged from the pretreatment unit 70 may then be supplied to the electrolytic bath 10.

The pretreatment unit 70 is configured to be able to remove at least a part of the metal component contained in the water to be treated 20A. In other words, at least a part of the metal component contained in the water to be treated 20A is removed in the pretreatment unit 70. The water to be treated is supplied to the electrolytic bath 10 in a state where at least a part of the metal component is removed in the pretreatment unit 70.

The inventors of the present application have newly found that presence of the metal component contained in the water to be treated is one of factors of the consumption of the catalyst layer. Although not limited by a specific theory, this may be caused by generation of radicals such as hydroxyl radicals, which are highly reactive active species, from hydrogen peroxide generated during the electrolysis using the metal component present in the water to be treated as a catalyst.

In the water treatment device 1' according to the second embodiment of the present disclosure, the pretreatment unit 70 as described above is provided in the previous stage of the electrolytic bath 10, so that the consumption of the catalyst layer can be further suitably suppressed. Specifically, in the pretreatment unit 70, it is possible to reduce an amount of radicals generated during the electrolysis by reducing an amount of metal components contained in the water to be treated 20 supplied to the electrolytic bath 10. This can make it possible to suitably suppress the consumption of the catalyst layer due to presence of the radicals.

The metal component removed by the pretreatment unit 70 is preferably a transition metal. In particular, a transition metal component that can be reduced in the water to be treated is more preferably removed in the pretreatment unit 70 because it can promote the generation of the hydroxyl radicals through Fenton reaction.

The metal component may be mixed by, for example, elution from a material contained in a pipe or the like for transferring the water to be treated 20A. Considering that the water treatment device of the present disclosure can be used for treatment of the city water, the metal component removed by the pretreatment unit 70 is preferably a metal component used for a material such as the pipe through which the city water can pass.

Preferable examples of the metal component removed by the pretreatment unit 70 include a metal such as Fe (iron), Cu (copper), Cr (chromium), Mn (manganese), or Ni (nickel), or a compound thereof. In other words, the pretreatment unit 70 may be configured to be able to remove the metal component containing at least one selected from the group consisting of Fe, Cu, Cr, Mn, and Ni.

The configuration of the pretreatment unit 70 is not particularly limited as long as it can perform a treatment for removing at least a part of the metal component contained in the water to be treated 20A. In other words, any means capable of removing at least a part of the metal component may be used for removal of the metal component performed in the pretreatment unit 70. For example, the pretreatment unit 70 may be able to remove the metal component by various means such as a flocculation precipitation method, a coprecipitation method, a sulfide method, an ion flotation method, an ion exchange method, and an adsorption method. In addition, the pretreatment unit 70 may be configured to be able to capture a solid such as a precipitate compound or an aggregate containing the metal component by including a filter. As the filter, for example, a coarse filtration membrane, a microfiltration membrane (MF membrane), and/or an ultrafiltration membrane (UF membrane) can be used.

A total concentration of the transition metal component in the water to be treated 20 stored in the electrolytic bath 10 may be, for example, 0.5 mg/L or less, and is more preferably 0.01 mg/L or less.

In order to further suppress the consumption of the catalyst layer due to the presence of the metal component, measures for suppressing mixing of the metal component into the water to be treated supplied to the electrolytic bath 10 may be taken. For example, components of the water treatment device 1' with which the water to be treated can be in contact, such as a pipe for transferring the water to be treated, may be made of a resin material. When the pipe is made of metal such as iron, there is a possibility that the metal component is mixed or eluted during transfer of the water to be treated. When the components of the water treatment device 1' such as a pipe are made of resin, it is possible to prevent the metal component from being mixed into the water to be treated from the components. Thus, the generation of the radicals due to the presence of the metal component is suppressed during the electrolysis of the water to be treated, so that the consumption of the catalyst layer can be suitably suppressed.

The embodiments of the present disclosure have been described above, but they are merely typical examples. Those skilled in the art will easily understand that the present disclosure is not limited thereto, and various aspects are conceivable without changing the gist of the present disclosure.

For example, a diaphragm may be provided between the first electrode and the second electrode. For example, the inside of the electrolytic bath may be divided into a plurality of regions (chambers) by an ion-permeable diaphragm disposed between the electrodes.

For example, a plurality of pretreatment units may be arranged in the previous stage of the electrolytic bath. In addition, another component may be provided between the pretreatment unit and the electrolytic bath.

The above effects and the like are merely one example. Therefore, the present disclosure is not limited to the above matters, and may have additional effects.

Note that an embodiment of the present disclosure as described above includes the following preferred aspects.
<1>
   A water treatment device including:
   an electrolytic bath capable of storing water to be treated;
   a first electrode and a second electrode immersed in the water to be treated in the electrolytic bath; and
   a control unit that controls energization of the first electrode and the second electrode, in which
   the first electrode and the second electrode each include a catalyst layer on an electrode surface, and
   the control unit is configured to be switchable between an electrolysis mode in which the water to be treated is electrolyzed and a film formation mode in which an oxide film is formed on the catalyst layer of an anode out of the first electrode and the second electrode, and to be capable of performing polarity inversion between the first electrode and the second electrode upon switching from the electrolysis mode to the film formation mode.
<2>
   The water treatment device according to <1>, in which the film formation mode, the electrolysis mode, and the polarity inversion are performed in this order.
<3>
   The water treatment device according to <1> or <2>, in which
   the electrolysis mode is performed after the film formation mode, and
   out of the first electrode and the second electrode, an electrode including the catalyst layer on which the oxide film is formed in the film formation mode functions as an anode in the electrolysis mode.
<4>
   The water treatment device according to any one of <1> to <3>, in which an electrode potential different from the electrode potential in the electrolysis mode is applied in the film formation mode.
<5>
   The water treatment device according to any one of <1> to <4>, in which the control unit applies a predetermined electrode potential to the first electrode and the second electrode by current value control.
<6>
   The water treatment device according to any one of <1> to <4>, in which the control unit applies a predetermined electrode potential to the first electrode and the second electrode by voltage value control.
<7>
   The water treatment device according to any one of <1> to <6>, in which the catalyst layer contains at least one noble metal selected from the group consisting of platinum, iridium, palladium, gold, silver, ruthenium, and rhodium.
<8>
   The water treatment device according to any one of <1> to <7>, in which the catalyst layer is a noble metal catalyst layer containing at least platinum.
<9>
   The water treatment device according to <8>, in which in the film formation mode, out of the first electrode and the second electrode, an electrode potential of the electrode as the anode is 800 mV or more and 1500 mV or less based on a standard hydrogen electrode potential.
<10>
   The water treatment device according to any one of <1> to <9>, in which the control unit repeats a treatment cycle of performing the film formation mode, the electrolysis mode, and the polarity inversion in this order.
<11>
   The water treatment device according to any one of <1> to <10>, in which an energization time in the film formation mode is set to 3% or more and 60% or less of an energization time in the electrolysis mode.
<12>
   The water treatment device according to any one of <1> to <11>, further comprising a pretreatment unit through which the water to be treated before being supplied to the electrolytic bath passes, in which
   the pretreatment unit removes at least a part of a metal component contained in the water to be treated.
<13>
   The water treatment device according to <12>, in which the metal component is a transition metal component contained in a pipe through which the water to be treated passes.
<14>
   The water treatment device according to <12> or <13>, in which the metal component contains at least one selected from the group consisting of Fe, Cu, Cr, Mn, and Ni.
<15>
   The water treatment device according to any one of <1> to <14>, further comprising a pipe through which the water to be treated supplied to the electrolytic bath passes, in which
   at least a portion of the pipe with which the water to be treated is in contact is formed of a resin material.

### [Examples]

Demonstration tests were conducted in accordance with the present disclosure.

### (Demonstration test 1)

A demonstration test was performed using the water treatment device 1 having a configuration shown in Fig. 1.

As the electrolytic bath, a bath having a capacity of 26.4 mL was used. The first and second electrodes used were electrodes having a titanium substrate measuring 110 mm×60 mm×0.5 mm, with a platinum catalyst layer sintered to a thickness of 0.2 µm on the entire surface of the substrate. The first electrode and the second electrode were arranged inside the electrolytic bath such that principal surfaces, which are the widest surfaces of the electrodes, faced each other. Note that an interval between the principal surface of the first electrode and the principal surface of the second electrode facing each other was 4 mm.

As the water to be treated, hard water prepared by adding NaHCO₃ (manufactured by NACALAI TESQUE, INC.), CaC_{I2}·2H₂O (manufactured by Wako Pure Chemical Industries, Ltd.), and MgSO₄·7H₂O (manufactured by Wako Pure Chemical Industries, Ltd.) to municipal water supplied by Kadoma City was used. The hardness of the water to be treated after preparation was about 350 mg/L.

The electrolytic treatment was performed in a flow system. Control conditions in the electrolytic treatment were as follows.

| | |
|---|---|
| · Flow rate of water to be treated: | 500 to 2000 mL/min |
| · Temperature of water to be treated in electrolytic bath: | about 10 to 20°C |
| · Current density in electrolysis mode: | 2.4 A/dm² |
| · Energization time in electrolysis mode: | 2 min |
| · Electrode potential of anode in film formation mode: | 800 mV (vs. SHE (standard hydrogen electrode)) |
| · Energization time in film formation mode: | 20 to 120 seconds |

The electrode potential of the anode in the film formation mode was adjusted by current value control. The switching between the electrolysis mode and the film formation mode including polarity inversion was performed according to the energization profile illustrated in Fig. 3A.

The electrode potential of the anode in the film formation mode was measured by a digital multimeter (digital power meter, WT200 manufactured by Yokogawa Electric Corporation) using a Pt wire (manufactured by Nilaco Corporation) as a measurement electrode. The oxide film was formed on the catalyst layer of the anode by passing a current of a value that would result in a predetermined electrode potential in terms of the standard hydrogen electrode at 25°C from the measured value.

The film formation mode was performed at various energization times, and the capacitance of the oxide film formed on the catalyst layer after performing the film formation mode of the electrolytic treatment of the first cycle was evaluated. The oxide film capacitance was determined by measuring the current value when the potential of -0.1 V was applied to the electrode on which the oxide film was formed for 180 seconds with a potentiostat (ALS760E manufactured by BAS Corporation), and integrating the obtained current-time curve with time. The oxide film capacitance per unit area was determined by dividing this oxide film capacitance by the electrode area.

The following table shows measurement results of the oxide film capacitance per unit area in the anode when the film formation mode is performed for various energization times.

**[Table 1]**

| | Energization time (sec) | Oxide film capacitance (C/cm²) |
|---|---|---|
| Example 1 | 20 | 0.178 |
| Example 2 | 40 | 0.200 |
| Example 3 | 60 | 0.203 |
| Example 4 | 90 | 0.219 |
| Example 5 | 120 | 0.230 |

As shown in Table 1, it was confirmed that the oxide film was formed on the catalyst layer by including the film formation mode. That is, according to the water treatment device of the present disclosure, it has been found that the oxide film can be suitably formed on the catalyst layer. In addition, it was found that as the energization time was longer, more oxide films were formed.

### (Demonstration test 2)

Effects of suppressing the consumption of the catalyst layer in the water treatment device of the present disclosure were evaluated.

As Examples 6 to 11, the electrolytic treatment was performed using the water treatment device having control conditions including the film formation mode at various electrode potentials and various energization times. Note that in this demonstration test, the same configuration as that of the water treatment device of Example 1 was used except that the control conditions of the electrode potential and the energization time shown in Table 2 were different. Table 2 below shows the control conditions of the film formation mode in Examples 6 to 11.

**[Table 2]**

| | Electrode potential (mV (vs. SHE)) | Energization time (sec) |
|---|---|---|
| Example 6 | 1400 | 10 |
| Example 7 | 1400 | 60 |
| Example 8 | 800 | 60 |
| Example 9 | 800 | 90 |
| Example 10 | 800 | 120 |
| Example 11 | 1100 | 60 |

As Comparative Example 1, the electrolytic treatment was performed using the water treatment device having the same configuration as the water treatment device of Example 1 under control conditions not including the film formation mode in the treatment cycle. That is, the electrolytic treatment was performed under the same control conditions as in Example 1 except that the control conditions of Comparative Example 1 did not include the film formation mode. The energization in the comparative example was performed according to the energization profile illustrated in FIG. 3C.

In Examples and Comparative Examples, the treatment cycle was repeated 10,000 times, and a film thickness of the catalyst layer after 10,000 cycles was measured. The film thickness of the catalyst layer was measured using a fluorescent X-ray analyzer (EDX7000 manufactured by Shimadzu Corporation). A percentage of the film thickness of the catalyst layer after 10,000 cycles to the film thickness of the catalyst layer before treatment was determined as a "film thickness retention rate (%)", and a degree of the consumption of the catalyst layer was evaluated. The film thickness retention rate in Examples and Comparative Examples was evaluated with respect to the electrode potential and the energization time in the film formation mode. Evaluation results are shown in Fig. 5.

As shown in Fig. 5, in any of Examples 1 to 6, a result showing a higher film thickness retention rate was obtained as compared with the water treatment device of Comparative Example 1. From this result, it was found that the consumption of the catalyst layer can be suitably suppressed by performing the electrolytic treatment in the treatment cycle including the film formation mode. Therefore, according to the water treatment device of the present disclosure that performs the energization cycle including the film formation mode, the consumption of the catalyst layer can be suitably suppressed.

### (Demonstration test 3)

Furthermore, the lifetime of the catalyst layer in the electrolytic treatment using the water treatment device according to the first embodiment and the water treatment device according to the second embodiment of the present disclosure was evaluated.

As Example 12, the water treatment device similar to that in Example 1 was used except that the electrode potential in the film formation mode was 975 mV(vs. SHE) and the energization time was 60 seconds. As Example 13, as shown in Fig. 4, the water treatment device similar to that in Example 12 was used except that a cartridge filter (manufactured by AS ONE Corporation, 1-5741-01) was provided as the pretreatment unit in the previous stage of the electrolytic bath, and a pipe for delivering the water to be treated and a constituent member of the electrolytic bath were changed to those made of resin. As Comparative Example 2, the water treatment device having the same configuration as the water treatment device of Example 1 was used except for the control conditions not including the film formation mode in the treatment cycle.

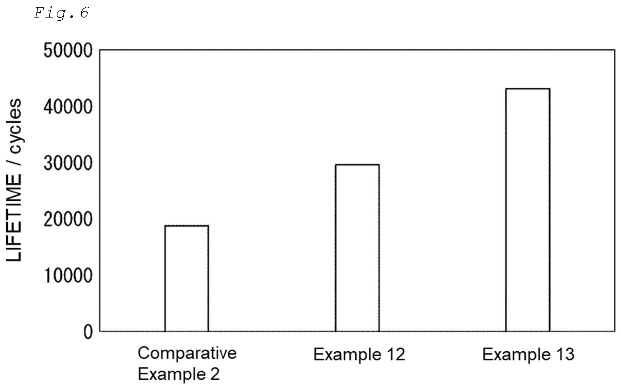

In the water treatment devices of Examples 12 and 13 and Comparative Example 2, the treatment cycle was repeatedly performed. The number of treatment cycles at the time when the voltage in the electrolysis mode exceeded an upper limit value (50 V) of a power supply set value and constant current control shifted to constant voltage control was recorded as the lifetime of the catalyst layer of the water treatment device. Results of evaluating the lifetime of the catalyst layer in each of the water treatment devices of Examples and Comparative Examples are shown in Fig. 6.

As shown in Fig. 6, the results showing that the lifetime of the catalyst layer in the water treatment device of Example 12 in which the electrolytic treatment including the film formation mode was performed was significantly longer as compared with the water treatment device of Comparative Example 2 not including the film formation mode were obtained.

In the water treatment device of Example 13 including the film formation mode and further including the pretreatment unit capable of removing the metal component, a result was obtained in which the lifetime of the catalyst layer was further extended as compared with the water treatment device shown in Example 12 not including the pretreatment unit. From this result, it is presumed that an amount of the metal component in the treatment object water supplied to the electrolytic bath was reduced by installing the pretreatment unit and changing a constituent member of the water treatment device such as a pipe to resin, and thus the consumption of the catalyst layer was further suppressed. That is, it is presumed that since the amount of the metal component was reduced, generation of the active species such as radicals during the electrolytic treatment was suppressed, and the consumption of the catalyst layer was further suppressed.

From the above, it was found that, according to the water treatment device of the present disclosure, the treatment cycle including the film formation mode can be performed, so that the consumption of the catalyst layer of the anode during the polarity inversion and the subsequent energization can be suppressed. Furthermore, it has been found that by providing the pretreatment unit capable of removing the metal component, consumption of the catalyst layer due to generation of the active species during the electrolytic treatment can also be suppressed, and the lifetime of the electrode can be further extended.

### INDUSTRIAL APPLICABILITY

The water treatment device of the present disclosure can be used in various fields requiring the electrolytic treatment of water.

### REFERENCE SIGNS LIST

- 1, 1': water treatment device
- 10: electrolytic bath
- 20: water to be treated
- 40: electrode
- 40A: first electrode
- 40B: second electrode
- 42: substrate
- 45: catalyst layer
- 46: oxide film
- 50: power source
- 60: control unit
- 70: pretreatment unit

## Claims

1. A water treatment device comprising:
an electrolytic bath capable of storing water to be treated;
a first electrode and a second electrode immersed in the water to be treated in the electrolytic bath; and
a control unit that controls energization of the first electrode and the second electrode, wherein
the first electrode and the second electrode each include a catalyst layer on an electrode surface, and
the control unit is configured to be switchable between an electrolysis mode in which the water to be treated is electrolyzed and a film formation mode in which an oxide film is formed on the catalyst layer of an anode out of the first electrode and the second electrode, and to be capable of performing polarity inversion between the first electrode and the second electrode upon switching from the electrolysis mode to the film formation mode.

2. The water treatment device according to claim 1, wherein the film formation mode, the electrolysis mode, and the polarity inversion are performed in this order.

3. The water treatment device according to claim 1, wherein
the electrolysis mode is performed after the film formation mode, and
out of the first electrode and the second electrode, an electrode including the catalyst layer on which the oxide film is formed in the film formation mode functions as an anode in the electrolysis mode.

4. The water treatment device according to claim 1, wherein an electrode potential different from the electrode potential in the electrolysis mode is applied in the film formation mode.

5. The water treatment device according to claim 1, wherein the control unit applies a predetermined electrode potential to the first electrode and the second electrode by current value control.

6. The water treatment device according to claim 1, wherein the control unit applies a predetermined electrode potential to the first electrode and the second electrode by voltage value control.

7. The water treatment device according to claim 1, wherein the catalyst layer contains at least one noble metal selected from the group consisting of platinum, iridium, palladium, gold, silver, ruthenium, and rhodium.

8. The water treatment device according to claim 1, wherein the catalyst layer is a noble metal catalyst layer containing at least platinum.

9. The water treatment device according to claim 8, wherein in the film formation mode, out of the first electrode and the second electrode, an electrode potential of the electrode as the anode is 800 mV or more and 1500 mV or less based on a standard hydrogen electrode potential.

10. The water treatment device according to claim 1, wherein the control unit repeats a treatment cycle of performing the film formation mode, the electrolysis mode, and the polarity inversion in this order.

11. The water treatment device according to claim 1, wherein an energization time in the film formation mode is set to 3% or more and 60% or less of an energization time in the electrolysis mode.

12. The water treatment device according to claim 1, further comprising a pretreatment unit through which the water to be treated before being supplied to the electrolytic bath passes, wherein
the pretreatment unit removes at least a part of a metal component contained in the water to be treated.

13. The water treatment device according to claim 12, wherein the metal component is a transition metal component contained in a pipe through which the water to be treated passes.

14. The water treatment device according to claim 12, wherein the metal component contains at least one selected from the group consisting of Fe, Cu, Cr, Mn, and Ni.

15. The water treatment device according to claim 1, further comprising a pipe through which the water to be treated supplied to the electrolytic bath passes, wherein
at least a portion of the pipe with which the water to be treated is in contact is formed of a resin material.
